# EUROPÄISCHE PATENTSCHRIFT

(11) **EP 3 118 180 B1**
(45) Veröffentlichungstag und Bekanntmachung des Hinweises auf die Patenterteilung: **11.04.2018**
(21) Anmeldenummer: 15194444.4
(22) Anmeldetag: 13.11.2015
(51) Int. Cl.: C05F 11/00, C05G 3/00, C05F 11/02, C05D 9/00

(54) **VERFAHREN ZUM HERSTELLEN EINES WASSERHALTENDEN DÜNGERS**
PROCESS FOR THE PREPARATION OF A WATER-RETAINING FERTILISER
PROCÉDÉ POUR LA PRÉPARATION D'UN ENGRAIS AVEC LA CAPACITÉ DE RETENTION D'EAU

(30) Priorität: 12.07.2015 DE 102015008821
(43) Veröffentlichungstag der Anmeldung: 18.01.2017
(73) Patentinhaber: G-tec Grimm technology GmbH, 70372 Stuttgart (DE)
(72) Erfinder: Grimm, Arnold, 36154 Hosenfeld (DE)
(74) Vertreter: Grünecker Patent- und Rechtsanwälte PartG mbB

(56) Entgegenhaltungen:
- WO-A1-2015/044526
- DE-A1- 1 567 101
- DE-A1- 2 737 941
- US-A- 3 844 759
- US-A1- 2004 161 606
- Robert Krisai: "Torfmoose - unsterbliche Pflanzen", Natur im Aufwind. Die Nationalpark Kalkalpen Zeitschrift, 1. April 1997 (1997-04-01), Seiten 16-17, XP055234672, Austria Gefunden im Internet: URL:http://wissensdatenbank.kalkalpen.at/D ownload.ashx?key=7356 [gefunden am 2015-12-08]
- "Unterrichtsideen Sachunterricht - Experiment: Wasserspeicher Torfmoos", , 11. April 2005 (2005-04-11), Seiten 1-1, XP055234673, Germany Gefunden im Internet: URL:http://www.cornelsen.de/shop/capiadapt er/download/get/fileNr/1/sku/3-464-0004819 8-0/callerId/SBK3/dnt/true/file/moore-sm4. pdf [gefunden am 2015-12-08]
- Rosemary Gales: "Sphagnum Moss - Sustainable Use and Management", , 12. September 2014 (2014-09-12), Seiten 1-4, XP055235105, Hobart, Australia Gefunden im Internet: URL:http://dpipwe.tas.gov.au/conservation/ flora-of-tasmania/tasmanian-vegetation-typ es/sphagnum-moss-sustainable-use-and-manag ement [gefunden am 2015-12-09]
- DATABASE WPI Week 201578 Thomson Scientific, London, GB; AN 2015-62628S XP002752086, -& CN 104 844 366 A (FEIDONG LIANWAN FAMILY FARM) 19. August 2015 (2015-08-19)
- "Sphagnum Moss", , 1. Januar 2013 (2013-01-01), Seiten 1-2, XP055235430, Gefunden im Internet: URL:http://venusflytrap.info/glossary-venu s-fly-trap/ [gefunden am 2015-12-10]

## Beschreibung

Die Erfindung betrifft ein Verfahren zum Herstellen eines wasserhaltenden Düngers, einen entsprechenden Dünger sowie ein Verfahren zur Erhöhung der Wasserhaltekapazität landwirtschaftlicher Anbauflächen.

Bekanntermaßen ist die Bepflanzung nährstoffarmer Böden mit geringer Wasserhaltekapazität, wie sie in ariden Gebieten anzutreffen sind, problematisch. Um derartigen Böden sowohl Nährstoffe zuzuführen als auch die Wasserhaltekapazität der Böden zu verbessern, ist es beispielsweise aus der EP 201 724 A2 bekannt, rieselfähige Dünger auf der Basis einer Nährstoffkomponente, insbesondere Gärgülle-Trockensubstanz, und einer Wasserhaltekomponente, insbesondere Kieselgur, herzustellen. Aufgrund der technisch realisierbaren Mischungsverhältnisse derartiger Komponenten und der Eigenschaften von Kieselgur-Partikeln ist die Wasserhaltekapazität solcher Dünger jedoch begrenzt und/oder lässt sich aufgrund des im jeweiligen Dünger vorgegebenen Mischungsverhältnisses nicht in ausreichendem Maße an örtliche Gegebenheiten anpassen.

Aus DATABASE WPI Week 201578, Derwent Publications Ltd., London, GB; AN 2015-62628S, XP002752086 ist ferner ein Verfahren zur Herstellung eines wasserhaltenden Düngers bekannt, bei dem vertorftes Moos in Wasser und Ethanol dispergiert wird.

Insbesondere für aride und nährstoffarme landwirtschaftliche Anbauflächen, beispielsweise in tropischen oder subtropischen Regionen, besteht der Bedarf für Dünger oder Zusatzdünger mit einer demgegenüber erhöhten Wasserhaltekapazität. Die Wasserhaltekapazität der Böden lässt sich dann effizienter, also mit weniger Düngermaterial, erhöhen und zudem flexibel mit einer separaten Nährstoffzufuhr mittels Bio-Dünger kombinieren.

Die gestellte Aufgabe wird mit einem Verfahren nach Anspruch 1 gelöst. Demnach dient dieses zum Herstellen eines wasserhaltenden Düngers und umfasst die Schritte: Zerkleinern eines pflanzlichen Materials, das gehäckselte Torfmoose und/oder Sukkulenten umfasst, mittels Ultraschall in Wasser zu einem zumindest überwiegend amorphen Wirkstoff; und Dispergieren des amorphen Wirkstoffs in einem Dispersionsmittel.

Der Wirkstoff liegt überwiegend oder vollständig in einem amorphen Zustand vor und somit nur in einem demgegenüber kleineren Maße in einem kristallinen Zustand. Im amorphen Zustand hat der Wirkstoff eine größere aktive Oberfläche als im kristallinen Zustand, so dass der amorphe Zustand generell ein höheres Bindungsvermögen aufweist, insbesondere für die Aufnahme und das Halten von Wasser. Unter einem wasserhaltenden Dünger ist zu verstehen, dass dieser eine signifikante gewichtsspezifische und insbesondere quantifizierbare Kapazität zum Aufnehmen, Halten und Abgeben von Wasser aufweist.

Die Torfmoose und/oder Sukkulenten liegen nach dem Häckseln im Wesentlichen in einem kristallinen Zustand vor. Durch Eintauchen des pflanzlichen Materials in Wasser und durch Einleiten von Ultraschall in das Wasser lässt sich das pflanzliche Material durch die von den Ultraschallwellen erzeugten mechanischen Schwingungen auf schonende Weise zerkleinern. Darunter ist insbesondere zu verstehen, dass wasserhaltende Moleküle und/oder Molekülverbände des pflanzlichen Materials erhalten bleiben, wohingegen eine übergeordnete intermolekulare Ordnung des pflanzlichen Materials, beispielsweise im Sinne eines Kristallgitters oder dergleichen, aufgebrochen wird.

Das Dispersionsmittel wirkt als Dispersionsträger für den amorphen Wirkstoff und wird allgemein auch als kontinuierliche Phase oder Hauptphase bezeichnet. Der amorphe Wirkstoff kann entsprechend als disperse Phase oder Nebenphase bezeichnet werden.

Torfmoose eignen sich besonders für eine Herstellung und energiesparende Anwendung des Düngers in gemäßigten Klimazonen. Torfmoose sind mit Ausnahme der Antarktis auf allen Kontinenten anzutreffen, vorwiegend in Klimazonen mit kühlen und feuchten Sommern sowie mit langen und kalten Wintern. Torfmoose lassen sich vergleichsweise effizient durch Nachzucht bereitstellen.

Sukkulente Pflanzen sind vor allem in Trockengebieten verbreitet und können Wasser über lange Dürreperioden hinweg in einem Grundgewebe aus relativ großen Zellen speichern. Geeignete Sukkulenten sind beispielsweise Pelargonien. Diese wachsen bevorzugt in Felsregionen und auf Küstendünen.

Somit sind mit Torfmoosen und/oder Sukkulenten für unterschiedliche geographische Regionen in ausreichender Menge verfügbare Pflanzen auf wirtschaftliche und energiesparende Weise als Grundlage für das zu häckselnde Pflanzenmaterial und den amorphen Wirkstoff verfügbar.

Vorzugsweise umfasst das Verfahren ferner einen vorangehenden Schritt, in dem die Torfmoose und/oder Sukkulenten zu Partikeln mit einer mittleren Größe von 1 bis 10 mm, insbesondere von 2 bis 5 mm, gehäckselt werden. Derart gehäckseltes pflanzliches Material hat eine aktive Oberfläche von etwa 200.000 bis 400.000 m²/kg und eignet sich in besonderem Maße als Ausgangsmaterial für eine Zerkleinerung mittels Ultraschall. Im Gegensatz zum im Wesentlichen amorphen Wirkstoff sind die Partikel des derart gehäckselten pflanzlichen Materials in einem sogenannten kristallinen Zustand.

Vorzugsweise wird der amorphe Wirkstoff in einem flüssigen oder festen Dispersionsmittel dispergiert. Eine feste Dispersion auf der Grundlage eines festen Dispersionsmittels verhindert dauerhaft und zuverlässig eine Entmischung der hergestellten Dispersion. Ferner ermöglichen feste Dispersionsmittel eine einfache Handhabung des wasserhaltenden Düngers als rieselfähiges Schüttgut oder dergleichen. Demgegenüber lassen sich flüssige Dispersionen auf der Grundlage flüssiger Dispersionsmittel besonders einfach und auf eine das Pflanzenmaterial schonende Weise herstellen. Die wasserhaltende Eigenschaft des Düngers wird durch den amorphen Wirkstoff bereitgestellt, wohingegen das Dispersionsmittel für die Wasserhaltefunktion unerheblich ist. Entsprechend spielt es keine Rolle, ob ein flüssiges Dispersionsmittels nach dem Ausbringen verdampft.

Vorzugsweise wird der Ultraschall mit einer Frequenz von 10 bis 30 kHz bezogen auf eine Ausbreitung in Wasser emittiert. Der Ultraschall wird beispielsweise von wenigstens einer Sonotrode in das Wasser emittiert. Der genannte Frequenzbereich ermöglicht eine effiziente Ankopplung der Ultraschallenergie an das zu zerkleinernde pflanzliche Material.

Vorzugsweise wird der Ultraschall über eine Dauer von 10 bis 30 min, insbesondere 15 bis 20 min, zur Zerkleinerung des Pflanzenmaterials in das Wasser emittiert. Dies ermöglicht eine effiziente Zerkleinerung des pflanzlichen Materials.

Vorzugsweise wird der Ultraschall mit einer Amplitude von 10 bis 50 µm, insbesondere von 20 bis 30 µm, bezogen auf eine Ausbreitung in Wasser emittiert. Auch dies dient einer effizienten Zerkleinerung des pflanzlichen Materials.

Vorzugsweise wird der Ultraschall mit einer Leistung von 10 bis 50 kW/kg Trockengewicht des pflanzlichen Materials emittiert. Dies dient einer effizienten und schonenden Zerkleinerung des pflanzlichen Materials.

Die gestellte Aufgabe wird ebenso mit einem wasserhaltenden Dünger nach Anspruch 8 gelöst. Demnach umfasst dieser ein Dispersionsmittel und einen darin dispergierten Wirkstoff. Erfindungsgemäß ist der Wirkstoff überwiegend oder vollständig in einem amorphen Zustand dispergiert und besteht aus einem pflanzlichen Material, das zerkleinerte Torfmoose und/oder Sukkulenten, insbesondere Pelargonien, umfasst.

Vorzugsweise umfasst das pflanzliche Material Partikel mit einer Größe von weniger als 1 µm. Derartige Dispersionen werden auch als kolloidal bezeichnet. Damit lassen sich besonders große aktive Oberflächen erzielen. Zudem wird eine Entmischung der Dispersion erschwert. Es lassen sich somit Dünger mit dauerhaft stabiler Dispersion bereitstellen.

Vorzugsweise weist das pflanzliche Material im amorphen Wirkstoff eine Oberfläche von wenigstens 1.000.000 m²/kg auf, insbesondere von wenigstens 3.000.000 m²/kg. Dadurch lässt sich die gewichtsspezifische Wasserhaltekapazität des Düngers gegenüber herkömmlichen kristallinen Strukturen um wenigstens eine Größenordnung verbessern.

Vorzugsweise ist das pflanzliche Material zu wenigstens 90%, insbesondere wenigstens 95%, in einem amorphen Zustand dispergiert. Der Anteil des amorphen Zustands ergänzt sich mit der Kristallinität des pflanzlichen Materials definitionsgemäß zu 100%. Demnach hat ein pflanzliches Material, das zu 90% in einem amorphen Zustand dispergiert ist, eine Kristallinität von 10%. Besonders bevorzugt ist das pflanzliche Material zu wenigstens 99% in einem amorphen Zustand dispergiert. Dadurch lässt sich eine besonders hohe gewichtsspezifische Wasserhaltekapazität des Düngers erzielen. Der Anteil des amorphen Zustands beziehungsweise die Kristallinität lassen sich beispielsweise durch Röntgenbeugungsmessung oder dergleichen Testverfahren bestimmen.

Vorzugsweise besteht das Dispersionsmittel zumindest anteilig aus einem Pflanzennährstoff. Dadurch lässt sich der Nährstoffgehalt des Düngers steigern. Jedoch hat das zerkleinerte pflanzliche Material aufgrund seiner ursprünglichen Inhaltsstoffe bereits selbst eine düngende Wirkung im Sinne einer Nährstoffgabe. Beispielsweise könnte das Dispersionsmittel aus einer ersten Düngersorte bestehen, beispielsweise aus einem Basisdünger. Der Dünger könnte bei Ausbringen gezielt durch eine zweite Düngersorte ergänzt werden, beispielsweise durch einen separaten Bio-Dünger. Als Dispersionsmittel eignen sich beispielsweise auch Kieselgur, Kieselsäure, Gesteinsmehl und/oder Gärgülle-Trockensubstanz.

Vorzugsweise beträgt das Trockengewichtsverhältnis von Wirkstoff zu Dispersionsmittel 0,1 bis 1, und vorzugsweise 0,25 bis 0,75. Dies ermöglicht gleichermaßen eine wirtschaftliche Herstellung des Düngers und ein praxisgerechtes Ausbringen des Düngers auf landwirtschaftliche Anbauflächen.

Die gestellte Aufgabe wird ebenso gelöst mit einem Verfahren zur Erhöhung der Wasserhaltekapazität, und insbesondere zur Düngung, landwirtschaftlicher Anbauflächen, wobei der Dünger nach wenigstens einem der obigen Ausführungsformen in einer Konzentration von 2 bis 20 kg/Hektar, insbesondere 5 bis 10 kg/Hektar, maschinell ausgebracht wird. Mit dem Dünger lassen sich aufgrund des pflanzlichen Wirkstoffs sowohl die Wasserhaltekapazität von Böden verbessern als auch Nährstoffe in die Böden einbringen.

Vorzugsweise wird der Dünger dann gemeinsam mit einem Bio-Dünger ausgebracht. Dies verbessert die Nährstoffgabe und ermöglicht eine gezielte Erhöhung der Wasserhaltekapazität und eine gezielte Nährstoffgabe je nach zu behandelndem Boden.

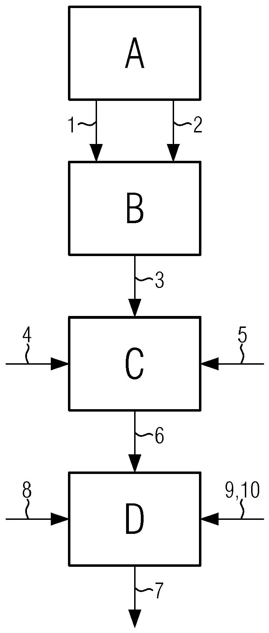

Eine bevorzugte Ausführungsform der Erfindung ist in der einzigen Figur dargestellt. Diese zeigt ein Ablaufschema des Verfahrens.

Demnach werden in einem anfänglichen Schritt A zuerst Torfmoose 1 und/oder Sukkulenten 2 bereitgestellt und einem anschließenden Schritt B zugeführt. Darin werden die Torfmoose 1 und/oder Sukkulente 2 gehäckselt und/oder anderweitig mechanisch zerkleinert und zu einem pflanzlichen Material 3 mit einer Partikelgröße von vorzugsweise 2 bis 5 mm verarbeitet.

Das pflanzliche Material 3 wird einem anschließendem Schritt C zugeführt, in dem das pflanzliche Material 3 in Wasser 4 getaucht wird, das beispielsweise in einem Tank, Becken oder dergleichen vorgehalten wird, und darin Ultraschall 5 ausgesetzt wird. Der Ultraschall 5 wird beispielsweise über wenigstens eine Sonotrode in das Wasser 4 über einen Zeitraum von vorzugweise 10 bis 30 min emittiert. Der Ultraschall hat dabei im Wasser vorzugsweise eine Frequenz von 10 bis 20 kHz und eine Amplitude von 10 bis 50 µm. Die Leistung des abgegebenen Ultraschalls 5 beträgt vorzugsweise 10 bis 50 kW/kg Trockengewicht des pflanzlichen Materials 3.

Im Schritt C wird das nach dem Häckseln im Wesentlichen in kristalliner Form vorliegende pflanzliche Material 3 durch mechanische Einwirkung des Ultraschalls 5 zerkleinert, so dass intermolekulare Verbände im pflanzlichen Material 3 in geeigneter Weise aufgebrochen werden, die Struktur wasserhaltender Moleküle jedoch erhalten bleibt. Dadurch wird aus dem pflanzlichen Material 3 ein im Wesentlichen vollständig oder zumindest überwiegend in einem amorphen Zustand vorliegender Wirkstoff 6 gewonnen. Das heißt, der Anteil amorpher Bestandteile ist darin größer als der Anteil kristalliner Bestandteile. Der im Wesentlichen amorphe Wirkstoff 6 kann neben den ursprünglich im pflanzlichen Material 3 vorhandenen Bestandteilen Wasser 4 enthalten und/oder darin dispergiert sein.

Der im Wesentlichen amorphe Wirkstoff 6 hat vorzugsweise eine Partikelgröße einer kolloiden Dispersion, also von höchstens 1 µm. Das pflanzliche Material 3 hat im Wirkstoff 6 vorzugsweise eine aktive Oberfläche von wenigstens 1.000.000 m²/kg.

Der im Wesentlichen amorphe Wirkstoff 6 wird einem anschließendem Schritt D zugeführt, indem ein wasserhaltender Dünger 7 in Form einer Dispersion bestehend aus dem amorphen Wirkstoff 6 als disperse Phase und einem Dispersionsmittel 8 als kontinuierliche Phase hergestellt wird. Die Dispersion wird beispielswiese als feste Dispersion durch Abdampfen des Wassers 4 hergestellt. Die Dispersion wird vorzugsweise unter Eintrag thermischer Energie 9 und/oder mechanischer Energie 10 hergestellt.

Das Dispersionsmittel 8 besteht vorzugsweise aus Kieselgur, Kieselsäure, Gesteinsmehl, Gärgülle-Trockensubstanz und oder einem anderweitigen Pflanzennährstoff.

Prinzipiell sind jedoch beliebige Dispersionen aus festen oder flüssigen Dispersionsmitteln 8 und dem amorphen Wirkstoff 6 denkbar. Auf der Grundlage eines flüssigen Dispersionsmittels 8 lässt sich beispielsweise ein wässriger Dünger 7 herstellen, der ohne den Eintrag thermischer Energie 9 eine besonders schonende Verarbeitung des dem Dünger 7 zugrundeliegendem pflanzlichen Materials 3 beziehungsweise des daraus gewonnenen amorphen Wirkstoffs 6 ermöglicht. Der amorphe Wirkstoff 6 behält dann nach dem Ausbringen und Trocknen eines wässrigen Düngers 7 seine wasserhaltende Eigenschaft.

Der Dünger 7 kann somit sowohl als feste Dispersion in Form rieselfähigem Schüttguts bereitgestellt werden als auch in Form einer flüssigen Dispersion, beispielsweise als flüssiges Düngerkonzentrat oder in Form von gebrauchsfertigem Flüssigdünger.

Der Dünger 7 wird vorzugsweise gemeinsam mit einem Bio-Dünger bekannter Art auf zu behandelnde landwirtschaftliche Anbauflächen ausgetragen. Der Austrag erfolgt maschinell mit herkömmlichen Arbeitsgeräten, wie beispielsweise Schleuderstreuern, Feldspritzen oder dergleichen.

Der erfindungsgemäße Dünger besitzt aufgrund seiner pflanzlichen Herkunft zusätzlich zu einer hohen Wasserhaltekapazität eine eigene Düngerwirkung aufgrund der im pflanzlichen Material 3 enthaltenen Nährstoffe. Der wasserhaltende Dünger 7 lässt sich somit flexibel an unterschiedliche Anforderungen hinsichtlich einer Verbesserung der Wasserhaltekapazität von Böden und der erforderlichen Nährstoffzufuhr in die Böden anpassen und einsetzen.

## Patentansprüche

1. Verfahren zum Herstellen eines wasserhaltenden Düngers (7) mit den Schritten: Zerkleinern eines pflanzlichen Materials (3), das gehäckselte Torfmoose (1) und/oder Sukkulenten (2) umfasst, mittels Ultraschall (5) in Wasser (4) zu einem zumindest überwiegend amorphen Wirkstoff (6), sodass die Struktur wasserhaltender Moleküle und/oder Molekülverbände des pflanzlichen Materials (3) erhalten bleibt und übergeordnete intermolekulare Verbände im pflanzlichen Material (3) aufgebrochen werden; und Dispergieren des amorphen Wirkstoffs in einem Dispersionsmittel (8).

2. Verfahren nach Anspruch 1, ferner umfassend einen vorangehenden Schritt, in dem die Torfmoose (1) und/oder Sukkulenten (2) zu Partikeln mit einer mittleren Größe von 1 bis 10 mm, insbesondere von 2 bis 5 mm, gehäckselt werden.

3. Verfahren nach Anspruch 1 oder 2, wobei der amorphe Wirkstoff (6) in einem flüssigen oder festen Dispersionsmittel (8) dispergiert wird.

4. Verfahren nach einem der vorigen Ansprüche, wobei der Ultraschall (5) mit einer Frequenz von 10 bis 30 kHz bezüglich Wasser (4) emittiert wird.

5. Verfahren nach wenigstens einem der vorigen Ansprüche, wobei der Ultraschall (5) über eine Dauer von 10 bis 30 min, insbesondere 15 bis 20 min, emittiert wird.

6. Verfahren nach wenigstens einem der vorigen Ansprüche, wobei der Ultraschall (5) mit einer Amplitude von 10 bis 50 µm, insbesondere von 20 bis 30 µm, bezüglich Wasser (4) emittiert wird.

7. Verfahren nach wenigstens einem der vorigen Ansprüche, wobei der Ultraschall (5) mit einer Leistung von 10 bis 50 kW/kg Trockengewicht des pflanzlichen Materials (3) emittiert wird.

8. Dünger (7) umfassend einen in einem Dispersionsmittel (8) dispergierten Wirkstoff (6), **dadurch gekennzeichnet dass** der Wirkstoff aus einem pflanzlichen Material (3) besteht, das überwiegend oder vollständig in einem amorphen Zustand dispergiert ist, bei dem die Struktur wasserhaltender Moleküle und/oder Molekülverbände pflanzlichen Materials (3) erhalten ist und übergeordnete intermolekulare Verbände im pflanzlichen Material (3) aufgebrochen sind, und das pflanzliche Material (3) zerkleinerte Torfmoose (1) und/oder Sukkulenten (2), insbesondere Pelargonien, umfasst.

9. Dünger nach Anspruch 8, wobei das pflanzliche Material (3) Partikel mit einer Größe von weniger als 1 µm umfasst.

10. Dünger nach Anspruch 8 oder 9, wobei das pflanzliche Material (3) eine aktive Oberfläche von wenigstens 1.000.000 m2/kg aufweist, insbesondere von wenigstens 3.000.000 m²/kg.

11. Dünger nach einem der Ansprüche 8 bis 10, wobei das pflanzliche Material (3) zu wenigstens 90%, insbesondere zu wenigstens 95%, im amorphen Zustand dispergiert ist.

12. Dünger nach wenigstens einem der Ansprüche 8 bis 11, wobei das Dispersionsmittel (8) zumindest anteilig aus einem Pflanzennährstoff besteht.

13. Dünger nach wenigstens einem der Ansprüche 8 bis 12, wobei das Trockengewichtsverhältnis von Wirkstoff (6) zu Dispersionsmittel (8) 0,1 bis 1 beträgt, und vorzugsweise 0,25 bis 0,75.

14. Verfahren zur Erhöhung der Wasserhaltekapazität, und insbesondere zur Düngung, landwirtschaftlicher Anbauflächen, wobei der Dünger (7) nach wenigstens einem der Ansprüche 8 bis 13 in einer Konzentration von 2 bis 20 kg/ha, insbesondere 5 bis 10 kg/ha, maschinell ausgebracht wird.

15. Verfahren nach Anspruch 14, wobei der Dünger (7) gemeinsam mit einem Bio-Dünger ausgebracht wird.

## Claims

1. A method of producing a water-retaining fertilizer (7), comprising the steps of: crushing a vegetable material (3) comprising chopped peat moss (1) and/or succulents (2) by means of ultrasound (5) in water (4), resulting in an at least predominantly amorphous active ingredient (6) such that the structure of water-retaining molecules and/or molecular compounds of the vegetable material (3) is retained and superordinate intermolecular compounds of the vegetable material (3) are broken up; and dispersing the amorphous active ingredient in a dispersant (8).

2. The method of claim 1, further comprising a preceding step of chopping the peat moss (1) and/or succulents (2) into particles having an average size of 1 to 10 mm, in particular 2 to 5 mm.

3. The method according to claim 1 or 2, wherein the amorphous active ingredient (6) is dispersed in a liquid or solid dispersant (8).

4. The method according to one of the preceding claims, wherein the ultrasound (5) is emitted with a frequency of 10 to 30 kHz with respect to water (4).

5. The method according to at least one of the preceding claims, wherein the ultrasound (5) is emitted over a period of 10 to 30 minutes, in particular 15 to 20 minutes.

6. The method according to at least one of the preceding claims, wherein the ultrasound (5) is emitted with an amplitude of 10 to 50 µm, in particular 20 to 30 µm, with respect to water (4).

7. The method according to at least one of the preceding claims, wherein the ultrasound (5) is emitted with a power of 10 to 50 kW/kg dry weight of the vegetable material (3).

8. A fertilizer (7) comprising an active ingredient (6) dispersed in a dispersant (8), **characterized in that** the active ingredient consists of a vegetable material (3) that is predominantly or completely dispersed in an amorphous state, wherein the structure of water-retaining molecules and/or molecular compounds of the vegetable material (3) is retained and superordinate intermolecular compounds in the vegetable material (3) are broken up, and the vegetable material (3) containing shredded peat moss (1) and/or succulents (2), in particular pelargonium.

9. The fertilizer according to claim 8, wherein the vegetable material (3) comprises particles having a size of less than 1 µm.

10. The fertilizer according to claim 8 or 9, wherein the vegetable material (3) has an active surface area of at least 1,000,000 m²/kg, in particular of at least 3,000,000 m²/kg.

11. The fertilizer according to one of claims 8 to 10, wherein the vegetable material (3) is at least 90%, in particular at least 95%, dispersed in the amorphous state.

12. The fertilizer according to at least one of claims 8 to 11, wherein the dispersant (8) at least partially consists of a vegetable nutrient.

13. The fertilizer according to at least one of claims 8 to 12, wherein the dry weight ratio of active ingredient (6) to dispersant (8) is 0.1 to 1, and preferably 0.25 to 0.75.

14. A method for increasing the water-retaining capacity, and in particular for fertilization, of agricultural acreage, wherein the fertilizer (7) according to at least one of claims 8 to 13 is mechanically applied in a concentration of 2 to 20 kg/ha, in particular 5 to 10 kg/ha.

15. The method of claim 14, wherein the fertilizer (7) is applied together with a bio-fertilizer.

## Revendications

1. Procédé pour la production d'un engrais (7) contenant de l'eau présentant les étapes : broyage d'une matière végétale (3), qui contient de la sphaigne (1) et/ou des succulentes (2) hachées, par des ultrasons (5) dans de l'eau (4) en une substance active (6) au moins principalement amorphe de manière telle que la structure des molécules et/ou des associations moléculaires qui contiennent de l'eau de la matière végétale (3) reste conservée et que les associations intermoléculaires supérieures dans la matière végétale (3) sont rompues ; et dispersion de la substance active amorphe dans un dispersant (8).

2. Procédé selon la revendication 1, comprenant en outre une étape préalable, dans laquelle la sphaigne (1) et/ou les succulentes (2) sont hachées en particules présentant une grosseur moyenne de 1 à 10 mm, en particulier de 2 à 5 mm.

3. Procédé selon la revendication 1 ou 2, la substance active (6) amorphe étant dispersée dans un dispersant (8) liquide ou solide.

4. Procédé selon l'une quelconque des revendications précédentes, les ultrasons (5) étant émis à une fréquence de 10 à 30 kHz par rapport à l'eau (4) .

5. Procédé selon l'une quelconque des revendications précédentes, les ultrasons (5) étant émis sur une durée de 10 à 30 minutes, en particulier de 15 à 20 minutes.

6. Procédé selon l'une quelconque des revendications précédentes, les ultrasons (5) étant émis à une amplitude de 10 à 50 µm, en particulier de 20 à 30 µm, par rapport à l'eau (4).

7. Procédé selon l'une quelconque des revendications précédentes, les ultrasons (5) étant émis à une puissance de 10 à 50 kW/kg de poids sec de la matière végétale (3).

8. Engrais (7) comprenant une substance active (6) dispersée dans un dispersant (8), **caractérisé en ce que** la substance active est constituée par une matière végétale (3), qui est principalement ou totalement dispersée dans un état amorphe, dans lequel la structure des molécules et/ou des associations moléculaires contenant de l'eau de la matière végétale (3) est conservée et les associations intermoléculaires supérieures dans la matière végétale (3) sont rompues et la matière végétale (3) comprend de la sphaigne (1) et/ou des succulentes (2) broyées, en particulier des pélargoniums.

9. Engrais selon la revendication 8, la matière végétale (3) comprenant des particules présentant une grosseur inférieure à 1 µm.

10. Engrais selon la revendication 8 ou 9, la matière végétale (3) présentant une surface active d'au moins 1.000.000 m²/kg, en particulier d'au moins 3.000.000 m²/kg.

11. Engrais selon l'une quelconque des revendications 8 à 10, la matière végétale (3) étant dispersée à raison d'au moins 90%, en particulier d'au moins 95%, dans un état amorphe.

12. Engrais selon au moins l'une quelconque des revendications 8 à 11, le dispersant (8) étant constitué au moins en partie par un nutriment de plantes.

13. Engrais selon au moins l'une quelconque des revendications 8 à 12, le rapport du poids sec de la substance active (6) à celui du dispersant (8) étant de 0,1 à 1 et de préférence de 0,25 à 0,75.

14. Procédé pour augmenter la capacité de rétention de l'eau, et en particulier pour la fertilisation, de surfaces de culture agricoles, l'engrais (7) selon au moins l'une quelconque des revendications 8 à 13 étant répandu à la machine en une concentration de 2 à 20 kg/ha, en particulier de 5 à 10 kg/ha.

15. Procédé selon la revendication 14, l'engrais (7) étant répandu en même temps qu'un engrais biologique.
